# EUROPEAN PATENT SPECIFICATION

(11) **EP 2 764 778 B1**
(45) Date of publication and mention of the grant of the patent: **30.11.2016**
(21) Application number: 12838387.4
(22) Date of filing: 02.10.2012
(51) Int. Cl.: A21D 8/04, A21D 2/26, A21D 10/00, A21D 13/08, A23L 3/3571

(54) **ANTI-FUNGAL AGENT FOR PROCESSED CEREAL FOODS**
ANTIMYKOTIKUM FÜR INDUSTRIELL VERARBEITETE GETREIDENAHRUNGSMITTEL
AGENT ANTIFONGIQUE POUR ALIMENTS CÉRÉALIERS TRANSFORMÉS

(30) Priority: 04.10.2011 JP 2011220549
(43) Date of publication of application: 13.08.2014
(73) Proprietor: Nagase ChemteX Corporation, Osaka-shi, Osaka 550-8668 (JP); Nagase & Co., Ltd., Osaka-shi Osaka 550-8668 (JP)
(72) Inventor: SHIRASAKA, Naoki, Kobe-shi Hyogo 651-2241 (JP); YAMAGUCHI, Hitomi, Kobe-shi Hyogo 651-2241 (JP)
(74) Representative: Schwabe - Sandmair - Marx
(86) International application number: PCT/JP2012/075517
(87) International publication number: WO 2013/051561

(56) References cited:
- JP-A- H1 066 503
- JP-A- H03 290 145
- JP-A- 2011 510 633
- HANS PETER SØRENSEN ET AL: "Oat (Avena sativa) Seed Extract as an Antifungal Food Preservative Through the Catalytic Activity of a Highly Abundant Class I Chitinase", APPLIED BIOCHEMISTRY AND BIOTECHNOLOGY, vol. 160, no. 6, 1 March 2010 (2010-03-01) , pages 1573-1584, XP055064940, ISSN: 0273-2289, DOI: 10.1007/s12010-009-8557-4
- David W M Leung ET AL: "Extending the benefits of antifungal proteins from plants", Science against microbial pathogens, 1 January 2011 (2011-01-01), XP055187384, Retrieved from the Internet: URL:http://www.formatex.info/microbiology3 /book/1236-1243.pdf [retrieved on 2015-05-05]
- YE X ET AL: "A chitinase with antifungal activity from the mung bean", PROTEIN EXPRESSION AND PURIFICATION, ACADEMIC PRESS, SAN DIEGO, CA, vol. 40, no. 2, 1 April 2005 (2005-04-01), pages 230-236, XP004781373, ISSN: 1046-5928, DOI: 10.1016/J.PEP.2004.06.032
- F. MAUCH ET AL: "Antifungal Hydrolases in Pea Tissue : II. Inhibition of Fungal Growth by Combinations of Chitinase and -1,3-Glucanase", PLANT PHYSIOLOGY, vol. 88, no. 3, 1 November 1988 (1988-11-01), pages 936-942, XP055187371, ISSN: 0032-0889, DOI: 10.1104/pp.88.3.936
- S. S Guttmann: "Enzymeinsatz zur Konservierung von Backwaren", brot+backwaren, 1 February 2014 (2014-02-01), XP055187394, Retrieved from the Internet: URL:file:///C:/Users/DB52148/AppData/Local /Temp/bub_2014-02_50_Enzymeinsatz_zur_Kons ervierung_von_Backwaren-1.pdf [retrieved on 2015-05-05]
- SORENSEN ET AL.: 'Oat (Avena sativa) Seed Extract as an Antifungal Food Preservative Through the Catalytic Activity of a Highly Abundant Class I Chitinase.' APPLIED BIOCHEMISTRY AND BIOTECHNOLOGY vol. 160, no. 6, 2010, pages 1573 - 1584, XP055064940
- TORU HIDAKA ET AL.: 'Shokuhin Tenkabutsu Jiten (2001 Nenban)' SHOKUHIN KAGAKU SHINBUNSHA 01 October 2001, XP008174662

## Description

### Technical Field

The present invention relates to an anti-fungal agent for processed cereal foods.

### Background Art

In order to extend the length of preservation time of food, it is necessary to suppress growth of microorganisms, particularly mold to prevent putrefaction. Generally, it is thought that putrefaction of food depends on the preservation condition (surrounding environment) after food production, and a technique of prevention against putrefaction using an anti-fungal agent, preservation pH, preservation temperature, water activity control and the like in combination is in practical use.

The production of bread, which is most typical of processed cereal foods, uses various enzymes for increasing the volume, preventing staling, improving the structure and color of the crumb of bread, and improving the color of crust. The representative examples of the enzymes include amylases, hemicellulases such as xylanase; oxidases; and lipases (Patent Document 1). Also, the use of enzymes in place of emulsifying agents used for staling prevention and dough prparation is being studied. Taking the global breadmaking market into consideration, from the point of view of reducing costs of raw materials or increasing the efficiency of production processes in the production of bread, the use of enzymes has attracted attention.

On the other hand, cakes, confectioneries, noodles and cooked rice are preserved mainly in a refrigerated state or a frozen state. Moreover, industrially, there are cases where an anti-fungal agent such as calcium propionate and alcohol is also used. However, it has been reported that the use of an anti-fungal agent can impair the flavor of foods and affect the physical properties of foods. As a result, preventing mold from growing on foods is an important problem related to the extension of preservation time of processed cereal foods, and therefore, a safe and inexpensive anti-fungal agent is desired.

### Citation List

### Patent Documents

Patent Document 1: Japanese Laid-Open Patent Publication No. 2007-325515

Document "Hans Peter Sorensen et al.: "Oat (avena sativa) seed extract as an anti-fungal food preservative through the catalytic activity of a highly abundant class I chitinase", Applied Biochemistry and Biotechnology, Vol. 160, No. 6, 1 March 2010 (2010-03-01), pages 1573 - 1584, XP055064940, ISSN: 0273-2289, DOI: 10.1007/s12010-009-8557-4" discloses the provision of an anti-fungal agent comprising chitinase which is used as a preservative for rye bread.

Document "David W. M. Leung et al.: "Extending the benefits of anti-fungal proteins from plants", Science against microbial pathogens, 1 January 2011 (2011-01-01), XP055187384", retrieved from the internet: URL:http://www.formatex.info/microbiology3/book/1236-1243.pdf discloses antifungal agents comprising chitinase.

Document "Ye X. et al.: "A chitinase with anti-fungal activity from the mung bean", Protein expression and purification, Academic Press, San Diego, CA, Vol. 40, No. 2, 1 April 20015 (2005-04-01), pages 230 - 236, XP004781373, ISSN: 1046-5928, DOI: 10.1016/J.PEP.2004.06.032" discloses a chitinase with an anti-fungal acitivity isolated from mung bean seeds.

Document "F. Mauch et al.: "Anti-fungal hydrolases in pea tissue: II. Inhibition of fungal growth by combinations of chitinase and ß-1,3-glucanase", Plant Physiology, Vol. 88, No. 3, 1 November 1988 (1988-11-01), pages 936 - 942, XP055187371, ISSN: 0032-0889, DOI: 10.1104/pp.88.3.936" describes the inhibition of fungal growth by combinations of chitinase and ß-1,3-glucanase.

### Summary of the Invention

### Technical Problem

It is an object of the present invention to provide a safe and inexpensive anti-fungal agent for processed cereal foods.

### Solution to Problem

As a result of intensive research to solve the foregoing problems, the inventors of the present invention found that it is possible to provide a safe and inexpensive anti-fungal agent for processed cereal foods by using chitinase, and completed the present invention.

The present invention provides an anti-fungal agent for processed cereal foods, comprising chitinase **and calcium propionate, wherein the calcium propionate is contained in a ratio of 0.1 to 500 parts by mass to 1 part by mass of the chitinase.**

In one embodiment, calcium propionate is contained in a ratio of 0.1 to 500 parts by mass to 1 part by mass of the chitinase.

The present invention also provides an anti-fungal agent-containing processed cereal food, which contains the anti-fungal agent.

In one embodiment, the food is bread, a cake or a confectionery.

The present invention further provides a method for producing an anti-fungal agent-containing processed cereal food, which comprises a step of incorporating the anti-fungal agent into the processed cereal food.

In one embodiment, the step is mixing the anti-fungal agent into cereal materials.

In one embodiment, the anti-fungal agent is mixed so that chitinase is contained in an amount of 1 to 10,000 µg/g of the cereal materials.

In one embodiment, the step is applying the anti-fungal agent on the surface of the processed cereal food.

In one embodiment, the anti-fungal agent is applies so that chitinase is contained in an amount of 2 to 200 µg/cm² of the surface of the processed cereal food.

### Advantageous Effects of the Invention

With the present invention, it is possible to provide a safe and inexpensive anti-fungal agent for processed cereal foods. Due to the inclusion of an enzyme, chitinase, the anti-fungal agent for processed cereal foods of the present invention is safe and inexpensive.

### Brief Description of Drawings

FIG. 1 is a graph showing the increase of mold appearing on bread where 0.05% calcium propionate and 15 or 20 ppm chitinase XGP-402 are combined.
FIG. 2 is a graph showing the increase of mold appearing on bread where 0.1% calcium propionate and 5 or 20 ppm chitinase XGP-402 are combined.
FIG. 3 is a graph showing the increase of mold appearing on bread where 0.1% calcium propionate and 0.2% chitinase XGP-403 or XGP-405 are combined.

### Description of Embodiments

The anti-fungal agent for processed cereal foods of the present invention contains chitinase **and calcium propionate.**

In the present invention, the processed cereal food means food obtained by processing cereals. For example, the processed cereal food means food obtained by using cereals as they are, or processed cereals (e.g., pulverized cereals and ground cereals) as raw materials, mixing any other materials to the raw materials as appropriate to produce a mixture (e.g., dough), processing the mixture by a method such as baking, steaming, frying and boiling, and shaping the mixture or adding other ingredients to the mixture if necessary. Examples of cereals include wheat, corn, rice, buckwheat, barley, rye, and oats. Examples of processed cereal foods include bread, cakes, confectioneries, noodles, and cooked rice. Bread, cakes, and confectioneries are preferable, and bread is more preferable. Examples of bread include white bread, sweet pastries, rolls, French bread, steamed buns, stuffed bread, bread rolls, fruit bread, corn bread, butter-enriched rolls, buns, sweet dough, croissants, Danish pastries, hardtacks, and pretzels. Examples of cakes include sponge cakes, Swiss rolls, angel cakes, pound cakes, fruitcakes, and hotcakes. Examples of confectioneries include doughnuts, madeleines, baumkuchens, crepes, waffles, castellas, cookies, biscuits, crackers, muffins, choux pastries, éclairs, millefeuilles, tarts, wafers, pies, pizzas, snack food, soufflés, Senbei (rice crackers), Okaki (fried rice cakes), Arare (cubic rice crackers), Manjuu (buns with a bean-jam filling), Dora-yaki (two small pancakes with bean jam in between), Imagawa-yaki (Japanese muffin filled with bean jam), Tai-yaki (fish-shaped pancake filled with bean jam), rice cakes, Chinese steamed buns, mooncakes, small round cookies, and fried dough cookies. Examples of noodles include udon (Japanese wheat noodles), soba (Japanese buckwheat noodles), somen (Japanese thin wheat noodles), pasta, Chinese noodles, rice vermicelli, and pho (Vietnamese noodles). Examples of cooked rice include rice, steamed rice, Chimaki (rice dumplings wrapped in bamboo leaves), rice balls, sushi, and Chinese-style fried rice.

Chitinase in the present invention is a general name referring to enzymes that degrade chitin. Chitin is ß-1,4-poly-N-acetyl glucosamine, a polysaccharide in which a plurality of
monosaccharides, N-acetyl glucosamines (GlcNAc) are linked via ß-1,4 bonds, and is a main structural polysaccharide of arthropods, mollusks, ectoprocts, and fungi. Chitin is cleaved into GlcNAcs and oligosaccharides thereof by chitinase (EC3.2.1.14) derived from plants (e.g., papayas), mid-gut glands of mollusks, microorganisms (e.g., actinomycetes) and the like. Chitinase is a general name referring to enzymes that cleave chitin into oligosaccharides or GlcNAcs. It is known that chitinases include exo-chitinases and endo-chitinases in terms of cleavage patterns, and chitinases include family 18, family 19 and other families in terms of the homology of gene sequences, but there is no particular limitation on chitinase to be contained in the anti-fungal agent for processed cereal foods of the present invention. Chitinases of family 18 or other families are preferable.

There is no particular limitation on methods for preparing chitinase. Examples thereof include a method for preparing chitinase from plants or microorganisms containing chitinase. A method for preparing chitinase from microorganisms is preferable because the microorganisms can be mass-cultured and chitinase can be prepared inexpensively. There is no particular limitation on microorganisms. Examples thereof include actinomycetes, bacteria, mold, and yeasts. Actinomycetes are preferable. Examples of actinomycetes include Streptomyces griseus (hereinafter, "Streptomyces" is described as "S."), S. avermitilis, S. violaceoruber and S. cinnamoneus. These strains are available from bioresource collections such as RIKEN, the National Institute of Technology and Evaluation, and the American Type Culture Collection. A method for preparing chitinase from microorganisms include the steps of, for example, culturing microorganisms producing chitinase; separating microorganism cells and a solution containing chitinase from the culture; and separating and purifying chitinase from the solution containing chitinase. For culturing microorganisms producing chitinase, the microorganisms are cultured in a culture medium containing a nutrient source which the microorganisms can utilize. The culture medium may be in a liquid form or in a solid form as long as the production of chitinase is promoted. A liquid culture medium is preferable for mass culture. Examples of the nutrient source include a carbon source, a nitrogen source and inorganic salts. Examples of the carbon source include glucose, glycerin, dextrin, starch, molasses, oil from animals and plants, and chitin. Examples of the nitrogen source include soybean flour, corn steep liquor, cottonseed cakes, meat extract, peptone, yeast extract, ammonium sulfate, sodium nitrate, and urea. Examples of the inorganic salts include sodium, potassium, calcium, magnesium, manganese, iron, cobalt, zinc, and phosphoric acid. A culturing method may be stationary culture, shaking culture, or aerated and stirred culture, and aerated and stirred culture is preferable for mass culture. A culture temperature is generally 15 to 37°C, and preferably 20 to 30°C. pH of the culture medium is preferably pH 5 to 9. A culture time is generally 2 to 7 days, and the culture is stopped when the amount of the chitinase accumulated in the culture medium reaches its maximum. For separating microorganism cells and a solution containing chitinase from the culture, known methods such as centrifugation and filtration can be used. For separating and purifying chitinase from the solution containing chitinase, known methods such as ultrafiltration using a filtration membrane with molecular weight cut off of 5,000 or 10,000, fractionation using ammonium sulfate or ethanol, and purification by chromatography can be used in combination as appropriate based on a desired purity of chitinase. As chitinase, the solution containing chitinase may be used in a liquid state as it is, or a powdered enzyme obtained by drying the solution in a vacuum or lyophilizing the solution may be used. In the present invention, it is preferable to use chitinase with high purity obtained by culturing actinomycetes in a culture medium containing a carbon source such as glucose and glycerol, which actinomycetes can relatively easily utilize, a naturally-derived nitrogen source such as meat extract and yeast extract, and inorganic salt such as calcium salt; concentrating, by ultrafiltration, the culture supernatant obtained by separating actinomycete cells from the culture; and purifying chitinase from the concentrated solution by ammonium sulfate precipitation, alcohol precipitation, column chromatography and the like.

The anti-fungal agent for processed cereal foods of the present invention further**more** contain**s** calcium propionate. Calcium propionate is contained in a ratio of 0.1 to 500 parts by mass and preferably 1 to 200 parts by mass to 1 part by mass of chitinase.

There is no particular limitation on mold against which the anti-fungal agent for processed cereal foods of the present invention exhibit an anti-fungal effect. Examples of the mold includes a bread mold (Aspergillus), aspergillus (Aspergillus), penicillium (Penicillium), cladosporium (Cladosporium), rhizopus (Rhizopus), and mucor (Mucor).

The anti-fungal agent for processed cereal foods of the present invention may further contain a preservative agent, a shelf-life improving agent and alcohol. Examples of preservative agents include benzoic acid, benzoic acid salt, sorbic acid, sorbic acid salt, paraben, polylysine, milt protein degradation product, tsunaburishin, nisin, and natamycin. Examples of shelf-life improving agents include organic acid, organic acid salt (e.g., sodium acetate), and glycine. Examples of alcohol include ethanol. The rest of the anti-fungal agent for processed cereal foods of the present invention is generally water.

An anti-fungal agent-containing processed cereal food of the present invention contains the above-described anti-fungal agent. Accordingly, chitinase is contained. There is no particular limitation on the amount of chitinase contained in the anti-fungal agent-containing processed cereal food of the present invention as long as the anti-fungal effect of chitinase is exhibited. Chitinase is preferably contained in an amount of 0.5 to 100,000 µg/g of processed cereal food, more preferably 0.65 to 6,600 µg/g, and even more preferably 1.3 to 1,300 µg/g. Particularly, when chitinase is contained on the surface, chitinase is preferably contained in an amount of 5 to 500 µg/g of a processed cereal food, and more preferably 12.5 to 250 µg/g.

A method for producing the anti-fungal agent-containing a processed cereal food of the present invention includes the step of incorporating the above-described anti-fungal agent into a processed cereal food. There is no particular limitation on the step as long as chitinase is incorporated in the processed cereal food to exhibit the anti-fungal effect of chitinase. Chitinase may be added in the final stage or in the intermediate stage of the production of the processed cereal food, or to cereal materials, or in combination of at least two of these adding methods. Examples thereof include mixing the above-described anti-fungal agent into cereal materials, and applying the above-described anti-fungal agent on the surface of the processed cereal food. For mixing the above-described anti-fungal agent to cereal materials, for example, an aqueous solution, alcoholic solution, or the like containing the above-described anti-fungal agent is kneaded into raw materials, dough, or the like of the processed cereal food, or the raw materials, dough, or the like is immersed in the aqueous solution, alcoholic solution, or the like. For applying the above-described anti-fungal agent on the surface of the processed cereal food, for example, an aqueous solution, alcoholic solution, or the like containing the above-described anti-fungal agent is sprayed or coated on the surface of the processed cereal food. Spray or coating may be before or after baking the processed cereal food, and preferably after baking the processed cereal food. When mixing into the cereal materials, the above-described anti-fungal agent is preferably contained in the processed cereal food in an amount of 1 to 10,000 µg/g of the cereal materials, and more preferably 2 to 2,000 µg/g. When applying on the surface of the processed cereal food, the above-described anti-fungal agent is preferably attached thereto in an amount of 2 to 200 µg/cm² of the surface of the cereal materials, and more preferably 5 to 100 µg/cm².

### Examples

Hereinafter, the present invention will be described more specifically by way of examples, but the present invention is not limited to the examples below.

All chitinases used in the examples below are derived from actinomycetes. Calcium propionate used in the examples below is a preservative agent widely used in foods, and is known to exhibit the anti-fungal effect. In the examples below, "%" means "% by mass".

### Example 1: Anti-fungal Effect by Spraying Method (1)

Three hundred and thirty grams of bread dough (dough) of the raw materials blended in the ratio shown in Table 1 (Example 1) was mixed at a low speed for 5 minutes, and then, was mixed at a high speed for 7 minutes. The dough was retained at 35°C for 100 minutes to be leavened, and then, was baked at 140°C for 20 minutes to obtain a loaf of bread (hereinafter, referred to as a "loaf").

**Table 1**

| Raw Materials | Example 1 (free of calcium propionate) | Example 2 (containing calcium propionate) |
|---|---|---|
| Flour (%) | 100 | 100 |
| Salt (%) | 2 | 2 |
| Yeast (%) | 3 | 3 |
| Water (%) | 60 | 60 |
| Ascorbic acid (ppm) | 50 | 50 |
| Amylase (ppm) | 22 | 22 |
| Xylanase (ppm) | 100 | 100 |
| CSL*(%) | 0.25 | 0.25 |
| Calcium propionate (%) | - | 0.3 |

| | | |
|---|---|---|
| *CSL; Calcium Stearoyl Lactylate | | |

The obtained loaf was left to room temperature, and the entire surface of the loaf (approximately 280 g) was sprayed with a spraying agent (approximately 10 µL/cm²) shown in Table 2 ("0.1% chitinase" means a concentration when 1 mg of chitinase is added with respect to 1 ml of the spraying agent). The loaves were retained in the atmosphere to dry the surface, and then, the loaves were independently put into separate plastic bags and were preserved at a room temperature. The presence or the absence of the growth of mold was checked visually. It should be noted that Denazyme CBT manufactured by Nagase ChemteX Corporation was used as chitinase XNP-161 (exo-chitinase) and Denazyme CBB manufactured by Nagase ChemteX Corporation was used as chitinase XGP-402 (chitinase, family 18). Moreover, the culture of S. violaceoruber was fractionated with ammonium sulfate and lyophilized for use as chitinase XGP-403 (chitinase, family 19), and the culture of S. griseus was fractionated with ammonium sulfate and lyophilized for use as chitinase XGP-405 (chitinase, family 19). Table 3 shows the results. Table 3 shows the length of preservation time of the loaves until the growth of mold was observed. In Table 3, "-" means that the loaf was sprayed with nothing.

**Table 2**

| Raw Materials | Spraying Agent 1 | Spraying Agent 2 | Spraying Agent 3 | Spraying Agent 4 | Spraying Agent 5 | Spraying Agent 6 |
|---|---|---|---|---|---|---|
| XNP-161 (%) | 0.1 | 0.25 | | | | |
| XGP-402 (%) | | | 0.1 | 0.25 | | |
| XGP-403 (%) | | | | | 0.25 | |
| XGP-405 (%) | | | | | | 0.25 |
| Ethanol (%) | 99.9 | 99.75 | 99.9 | 99.75 | 99.75 | 99.75 |
| Total (%) | 100 | 100 | 100 | 100 | 100 | 100 |

**Table 3**

| | Spraying Agent | Preservation Time (days) |
|---|---|---|
| | - | 7 |
| | Control* | 8 |
| | Spraying Agent 1 | 10 |
| Example 1 (free of calcium propionate) | Spraying Agent 2 | 13 |
| | Spraying Agent 3 | 11 |
| | Spraying Agent 4 | 10 |
| | Spraying Agent 5 | 12 |
| | Spraying Agent 6 | 10 |

| | | |
|---|---|---|
| * Ethanol containing 0.3% calcium propionate and 0.2% citric acid was sprayed as a control. | | |

As shown in Table 3, the length of preservation time of bread was extended for 3 to 6 days by adding chitinase. The length of preservation time of bread in a case of adding chitinase was extended for 2 to 5 days compared to the control which was more than in a case of adding calcium propionate. It was proved that chitinase has a stronger anti-fungal effect than calcium propionate.

### Example 2: Anti-fungal Effect by Spraying Method (2)

The anti-fungal effects of the spraying agents 1 to 3 were evaluated in the same manner as in Example 1, except that the raw materials were blended in the ratio shown in Table 1 (Example 2) instead of the ratio shown in Table 1 (Example 1). Accordingly, in the loaf (approximately 280 g) of the present example, calcium propionate was kneaded into the dough. Table 4 shows the results. Table 4 shows the length of preservation time of the loaves until the growth of mold was obsereved. In Table 4, "-" means that the loaf was sprayed with nothing.

**Table 4**

| | Spraying Agent | Preservation Time (days) |
|---|---|---|
| Example 2 (containing calcium propionate) | - | 11 |
| | Control* | 14 |
| | Spraying Agent 1 | 56 |
| | Spraying Agent 2 | 56 |
| | Spraying Agent 3 | 35 |

| | | |
|---|---|---|
| * Ethanol containing 0.3% calcium propionate and 0.2% citric acid was sprayed as a control. | | |

As shown in Table 4, the length of preservation time of bread was extended for 24 to 45 days by adding chitinase. The length of preservation time of bread in a case of spraying chitinase was extended for 21 to 42 days compared to the control which was more than in a case of spraying calcium propionate. In Example 2, it is thought that kneading calcium propionate into the bread dough allowed the length of preservation time of bread to be extended (for 11 days without spraying). Whereas the length of preservation time of bread was extended for 3 days more by spraying with calcium propionate (control), the length of preservation time of bread was extended for 24 to 45 days more by spraying with chitinase, which proved a remarkable anti-fungal effect.

### Example 3: Anti-fungal Effect by Kneading Method (1)

Four hundred grams of bread dough (dough) of the raw materials blended in the ratio shown in Table 5 ("1 ppm chitinase" means a concentration when 1 µg of chitinase is added with respect to 1 g of flour) was mixed at a low speed for 2 minutes, and then, was mixed at a high speed for 6 minutes. After bench time at 26 °C for 10 minutes, the dough was divided and shaped. The shaped dough was retained at 30°C for 60 minutes to be leavened, and then, baked at 220°C for 50 minutes to obtain six loaves.

**Table 5**

| Raw Materials | Control | Comparative Example | Example 3 | Example 4 | Example 5 |
|---|---|---|---|---|---|
| Flour (%) | 100 | 100 | 100 | 100 | 100 |
| Salt (%) | 2 | 2 | 2 | 2 | 2 |
| Yeast (%) | 3 | 3 | 3 | 3 | 3 |
| Water (%) | 55 | 55 | 55 | 55 | 55 |
| Enzyme (%) | 1 to 5 | 1 to 5 | 1 to 5 | 1 to 5 | 1 to 5 |
| Chitinase (ppm) | - | - | 15 or 20 | 5 or 20 | 2000 |
| Calcium Propionate (%) | - | 0.1 or 0.2 | 0.05 | 0.1 | 0.1 |

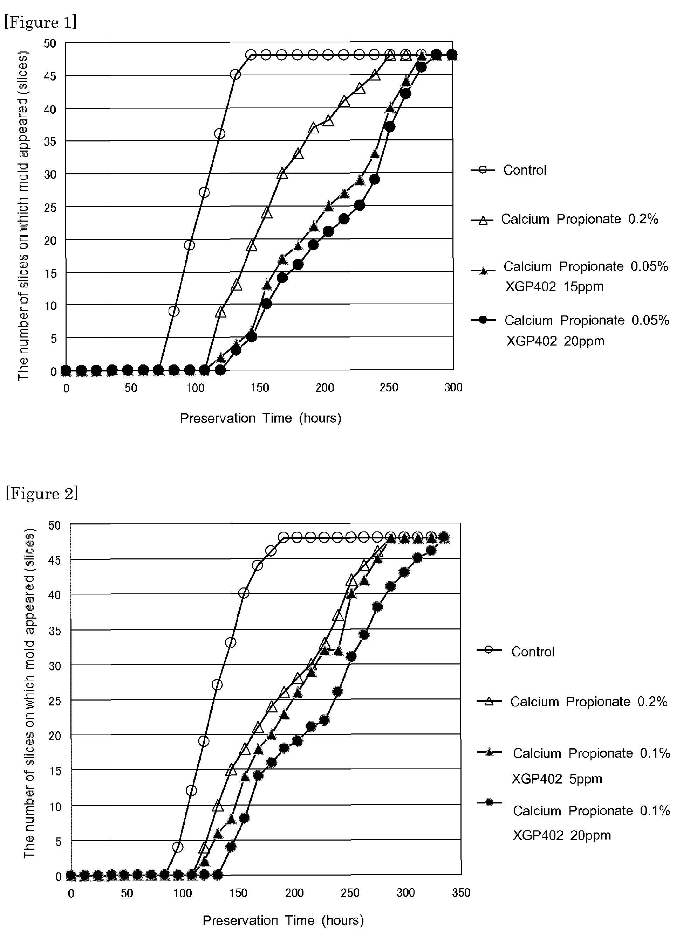

Each obtained loaf (approximately 340 g) was sliced into 8 slices with a thickness of 1.5 cm and a size of 110 to 120 cm², so that 48 slices were obtained in total. The slices were independently put into separate plastic bags and were preserved at a room temperature. The presence or the absence of the growth of mold was checked visually and the number of the slices on which mold grew was counted over time. FIG. 1 shows the results.

As shown in FIG. 1, it was observed that a combined use of 0.05% calcium propionate and 15 or 20 ppm chitinase XGP-402 exhibited an effect for extending the length of preservation time of bread, which exhibited a superior effect to where 0.2% calcium propionate was kneaded into the dough.

### Example 4: Anti-fungal Effect by Kneading Method (2)

The number of the slices on which mold grew was counted in the same manner in Example 3, except that 5 ppm chitinase was used instead of 15 ppm chitinase and 0.1% calcium propionate was used instead of 0.05% calcium propionate used with chitinase. FIG. 2 shows the results.

As shown in FIG. 2, it was observed that a combined use of 0.1% of calcium propionate and 5 or 20 ppm chitinase XGP-402 exhibited an effect for extending the length of preservation time of bread.

### Example 5: Anti-fungal Effect by Kneading Method (3)

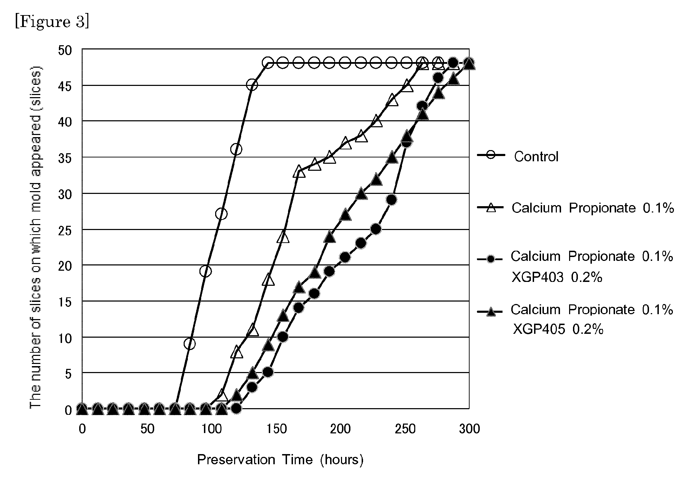

The number of slices on which mold grew was counted in the same manner in Example 4, except that 0.2% chitinase XGP-403 or XGP-405 was used instead of 5 or 20 ppm chitinase XGP-402 and 0.1% calcium propionate was used instead of 0.2% calcium propionate used as Comparative Example. FIG. 3 shows the results.

As shown in FIG. 3, it was observed that a combined use of 0.1% calcium propionate and 0.2% chitinase XGP-403 or XGP-405 exhibited an effect for extending the length of preservation time of bread.

### Industrial Applicability

With the present invention, it is possible to provide a safe and inexpensive anti-fungal agent for processed cereal foods. Due to the inclusion of an enzyme chitinase, the anti-fungal agent for processed cereal foods of the present invention is safe and inexpensive.

## Claims

1. An anti-fungal agent for a processed cereal food, comprising chitinase and calcium propionate, wherein the calcium propionate is contained in a ratio of 0.1 to 500 parts by mass to 1 part by mass of the chitinase.

2. An anti-fungal agent-containing processed cereal food, comprising the anti-fungal agent according to claim 1.

3. The food according to claim 2, which is bread, a cake or a confectionery.

4. A method for producing an anti-fungal agent-containing processed cereal food, which comprises a step of incorporating the anti-fungal agent according to claim 1 into a processed cereal food.

5. The production method according to claim 4, wherein the step is mixing the anti-fungal agent into cereal materials.

6. The production method according to claim 5, wherein the anti-fungal agent is mixed so that chitinase is contained in an amount of 1 to 10,000 µg/g of the cereal materials.

7. The production method according to claim 4, wherein the step is applying the anti-fungal agent on the surface of the processed cereal food.

8. The production method according to claim 7, wherein the anti-fungal agent is applied such that chitinase is contained in an amount of 2 to 200 µg/cm² of the surface of the processed cereal food.

## Patentansprüche

1. Antimykotisches Mittel für ein verarbeitetes Zerealien-Lebensmittel, umfassend Chitinase und Calciumpropionat, worin das Calciumpropionat in einem Verhältnis von 0,1 bis 500 Massenteilen zu 1 Massenteil Chitinase enthalten ist.

2. Antimykotisches Mittel enthaltendes verarbeitetes Zerealien-Lebensmittel, umfassend das antimykotische Mittel nach Anspruch 1.

3. Lebensmittel nach Anspruch 2, welches Brot, ein Kuchen oder eine Konditorware ist.

4. Verfahren zur Herstellung eines ein antimykotisches Mittel enthaltenden verarbeiteten Zerealien-Lebensmittels, welches den Schritt umfaßt, daß man das antimykotische Mittel nach Anspruch 1 in ein verarbeitetes Zerealien-Lebensmittel einarbeitet.

5. Herstellungsverfahren nach Anspruch 4, worin der Schritt darin besteht, daß man das antimykotische Mittel in Zerealien-Materialen einmischt.

6. Herstellungsverfahren nach Anspruch 5, worin das antimykotische Mittel derart eingemischt wird, daß Chitinase in einer Menge von 1 bis 10.000 µg/g der Zerealien-Materialien enthalten ist.

7. Herstellungsverfahren nach Anspruch 4, worin der Schritt darin besteht, daß man das antimykotische Mittel auf die Oberfläche des verarbeiteten Zeralien-Lebensmittels aufträgt.

8. Herstellungsverfahren nach Anspruch 7, worin das antimykotische Mittel derart aufgetragen wird, daß Chitinase in einer Menge von 2 bis 200 µg/cm² der Oberfläche des verarbeiteten Zerealien-Lebensmittels enthalten ist.

## Revendications

1. Agent antifongique pour un aliment céréalier transformé, contenant de la chitinase et du propionate de calcium, dans lequel le propionate de calcium est contenu dans un rapport de 0,1 à 500 parties en masse pour 1 partie en masse de chitinase.

2. Aliment céréalier contenant un agent antifongique, contenant l'agent antifongique selon la revendication 1.

3. Aliment selon la revendication 2, qui est du pain, un gâteau ou une confiserie.

4. Procédé pour produire un aliment céréalier transformé contenant un agent antifongique, qui comprend une étape d'introduction de l'agent antifongique selon la revendication 1 dans un aliment céréalier transformé.

5. Procédé de production selon la revendication 4, dans lequel l'étape consiste à mélanger l'agent antifongique dans des matières céréalières.

6. Procédé de production selon la revendication 5, dans lequel l'agent antifongique est mélangé de sorte que de la chitinase est contenue dans une proportion de 1 à 10.000 µg/g de matières céréalières.

7. Procédé de production selon la revendication 4, dans lequel l'étape consiste à appliquer l'agent antifongique à la surface de l'aliment céréalier transformé.

8. Procédé de production selon la revendication 7, dans lequel l'agent antifongique est appliqué de sorte que de la chitinase est contenue dans une proportion de 2 à 200 µg/cm² de la surface de l'aliment céréalier transformé.
